# EUROPEAN PATENT SPECIFICATION

(11) **EP 3 562 259 B1**
(45) Date of publication and mention of the grant of the patent: **10.11.2021**
(21) Application number: 16925850.6
(22) Date of filing: 29.12.2016
(51) Int. Cl.: H04W 76/30

(54) **CONTEXT RELEASE METHOD AND DEVICES**
KONTEXTFREIGABEVERFAHREN UND VORRICHTUNGEN
PROCÉDÉ ET DISPOSITIFS DE LIBÉRATION DE CONTEXTE

(43) Date of publication of application: 30.10.2019
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN)
(74) Representative: Manitz Finsterwald Patent- und Rechtsanwaltspartnerschaft mbB
(86) International application number: PCT/CN2016/112970
(87) International publication number: WO 2018/119853

(56) References cited:
- EP-A1- 2 852 244
- WO-A1-2015/115843
- CN-A- 103 067 937
- CN-A- 104 812 070
- US-B2- 9 131 424
- "3 Generation Partnership Project; Technical Specification Group Radio Access Network; Evolved Universal Terrestrial Radio Access Network (E-UTRAN); S1 Application Protocol (S1AP) (Release 14)", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V14.0.0, 30 September 2016 (2016-09-30), pages 1-333, XP051172840, [retrieved on 2016-09-30]

## Description

### TECHNICAL FIELD

The disclosure relates to the field of applications of communication technologies, and particularly to a context release method, device and system.

### BACKGROUND

Along with development of the society and advance of sciences and technologies, users have made higher requirements on mobile terminal access technologies. In a Long Term Evolution (LTE) system of a 4rd-Generation (4G) mobile communication system and a 5th-Generation (5G) mobile communication system, besides an idle state and a connected state well known to all, an inactive state is introduced. In an inactive state, a terminal may move between cells, without measurement switching, within a certain region according to Mobile Management (MM) which is adopted in an idle state, meanwhile, a related context of the terminal and an initial base station is the same as that in a connected state, and the related context is stored in the terminal and on a network side (at least stored in the initial base station on the network side) respectively. Here, the initial base station is a base station to which a cell where the terminal having not yet been switched to the inactive state is located belongs.

If a terminal is required by a network side to be switched from an inactive state to an idle state, the terminal may be controlled through a paging message to be switched from the inactive state to a connected state, then the terminal is controlled through a Radio Resource Control (RRC) connection release message to be switched from the connected state to the idle state and release the related context of the terminal and the initial base station, and correspondingly, the network side also releases the stored related context.

However, in such a method for context release in an inactive state, a network side and a terminal are required to interact via many messages so as to release the context, and the whole flow is thus complex.

WO 2015/115843 A1 discusses a method and apparatus for maintenance and release of UE resources. A UE that transmits signals requests release of radio resources configured to the UE. A radio network node releases radio resources configured to the UE for proximity-based service.

3GPP TS 36.413 V14.0.0 (2016-09) provides Technical Specification Group Radio Access Network; Evolved Universal Terrestrial Radio Access Network (E-UTRAN); S1 Application Protocol (S1 AP) (Release 14).

### SUMMARY

In order to solve the problem that the context release process is complex, the disclosure provides a context release method, device and system. The invention is defined by the independent claims. The following technical solutions are adopted.

A first aspect provides a context release method, which may include the operations as recited in claim 1.

Another aspect provides a context release device, as recited in claims 2-4.

Still another aspect provides a context release device, as recited in claims 5-9.

According to the context release method and device provided in the embodiments of the disclosure, a terminal triggers a network side to release a related context, and in a context release process, particularly a context release process in an inactive state, switching to a connected state for switching to the idle state is avoided, so that signaling interaction between the terminal and the network side is effectively reduced, a signaling overhead is reduced, and the whole flow is simplified.

It is to be understood that the above general description and the following detailed description are only exemplary and explanatory and not intended to limit the disclosure.

### BRIEF DESCRIPTION OF DRAWINGS

In order to describe the technical solutions of the embodiments of the disclosure more clearly, the drawings used in descriptions about the embodiments will be simply introduced below. The drawings described below only illustrate some embodiments of the disclosure. Other drawings may further be obtained by those of ordinary skill in the art according to these drawings without creative work.
FIG. 1 is a schematic diagram of an implementation environment of a context release system involved in a context release method according to part of embodiments of the disclosure.
FIG. 2-1 is a flowchart of a context release method according to an embodiment of the disclosure.
FIG. 2-2 is a flowchart of a method for establishing an RRC connection between a terminal and a first base station according to an embodiment of the disclosure.
FIG. 3-1 is a flowchart of another context release method according to an embodiment of the disclosure.
FIG. 3-2 is a flowchart of the operation that a core management device triggers a network-side device to release a related context according to an embodiment of the disclosure.
FIG. 3-3 is a flowchart of the operation that a core management device sends context release completion information to a first base station according to an embodiment of the disclosure.
FIG. 4 is a flowchart of another context release method according to an embodiment of the disclosure.
FIG. 5-1 is a block diagram of a context release device according to a schematic embodiment of the disclosure.
FIG. 5-2 is a block diagram of another context release device according to a schematic embodiment of the disclosure.
FIG. 5-3 is a block diagram of another context release device according to a schematic embodiment of the disclosure.
FIG. 6-1 is a block diagram of a context release device according to another schematic embodiment of the disclosure.
FIG. 6-2 is a block diagram of another context release device according to another schematic embodiment of the disclosure.
FIG. 7-1 is a block diagram of a context release device according to another schematic embodiment of the disclosure.
FIG. 7-2 is a block diagram of another context release device according to another schematic embodiment of the disclosure.
FIG. 7-3 is a block diagram of another context release device according to another schematic embodiment of the disclosure.
FIG. 8 is a structure diagram of a context release device according to a schematic embodiment of the disclosure.

Specific embodiments of the disclosure have been shown in the drawings, and more detailed descriptions will be made hereinafter. These drawings and text descriptions are adopted not to limit the scope of the concept of the disclosure in any manner but to describe the concept of the disclosure to those skilled in the art with reference to the specific embodiments.

### DETAILED DESCRIPTION

In order to make the purpose, technical solutions and advantages of the disclosure clearer, the implementation modes of the disclosure will further be described below in combination with the drawings in detail.

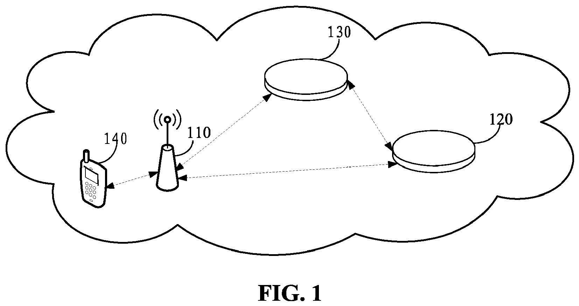

FIG. 1 is a schematic diagram of an implementation environment of a context release system involved in a context release method according to part of embodiments of the disclosure. The context release system may be an LTE system or a 5G mobile communication system, or a heterogeneous network where multiple mobile communication systems coexist, etc. The implementation environment includes in the invention a first base station 110, a network-side device 120 and a terminal 140. The implementation environment may also include a core management device 130. Here, the terminal 140 may communicate with the first base station 110, the first base station 110 may communicate with the network-side device 120 and the core management device 130 respectively, and the network-side device 120 may communicate with the core management device 130.

In the embodiments of the disclosure, the network-side device 120 may refer to a base station, and/or, a management device of a core network (core network) (for example, a Mobility Management Entity (MME) in LTE), and/or, a network-side central control node. The base station may at least include an initial base station, and the initial base station is a base station to which a cell where the terminal having not yet been switched to an inactive state is located belongs. The core management device 130 may be a server, or a server cluster consisting of a plurality of servers, or a cloud computing service center. In the embodiments of the disclosure, the core management device may be a device in a generalized concept, which may be a management device, or a management device cluster, or multiple management device clusters. Exemplarily, in the LTE system, the core management device may be an MME, or may also be an MME cluster or multiple MME clusters. The core management device 130 may manage the first base station 110 and/or the network-side device 120. The terminal 140 may be a smart phone, a computer, a multimedia player, an electronic reader, a wearable device and the like. Here, a related context of the terminal is stored in the network-side device 120 and the terminal 140, and the related context may be part or all of contexts related to the terminal. The related context may include present bear information, Quality of Service (QoS) information, security context and other information related to the terminal. For example, the security context may include a network key, a NAS number and the like.

In the implementation environment, the core management device 130 and the first base station 110 may represent different devices in different mobile communication systems. For example, in a LTE system, the core management device 130 may be one or more MMEs of the core network, and the first base station 110 may be an Evolved Node B (eNB). In a 5G mobile communication system, the core management device 130 may be one or more management devices of the core network, and the first base station 110 may be a Generation Node B (gNB).

In the implementation environment, the terminal usually has three states: an idle state, a connected state and an inactive state. Here, the idle state refers to a state that a terminal is powered on but does not establish an RRC connection with a wireless network. The connected state refers to a state that a terminal is powered on and establishes an RRC connection with a wireless network. The inactive state is a status between the idle state and the connected state. In the inactive state, an MM manner for the terminal is the same as that adopted in the idle state, and the related context of the terminal and the initial base station is the same as that in the connected state.

In the embodiments of the disclosure, there is made such a hypothesis that the terminal 140 is in an inactive state and a network-side device which stores the related context of the terminal before switching to the inactive state is the network-side device 120. Since the terminal in the inactive state may move between cells within a certain region (which may be a range preset by a network side), if a cell where the terminal 140 is located belongs to the first base station 110 (the first base station 110 may be or may be not the initial base station, which will not be limited in the embodiments of the disclosure), after the terminal determines to switch from the inactive state to the idle state, the terminal 140 may actively trigger the network side to execute a flow for context release to enable the network-side device 120 storing the context of the terminal to release the related context. Specifically, the terminal sends to the first base station a context release request which is used for indicating the network side to release the related context of the terminal, the first base station triggers the network-side device to release the related context according to the context release request and, after the network-side device releases the related context, feeds back a context release response to the terminal, and the terminal, after receiving the context release response from the first base station, may release the related context in the terminal.

In the embodiments of the disclosure, the terminal may send the context release request, and the first base station triggers the network-side device to release the related context according to the context release request. Here, the first base station may trigger the network-side device to release the related context after permitted by the core management device, or may indirectly trigger the network-side device to release the related context through the core management device, or may directly trigger the network-side device to release the related context. The embodiments of the disclosure will be described with the following aspects as examples.

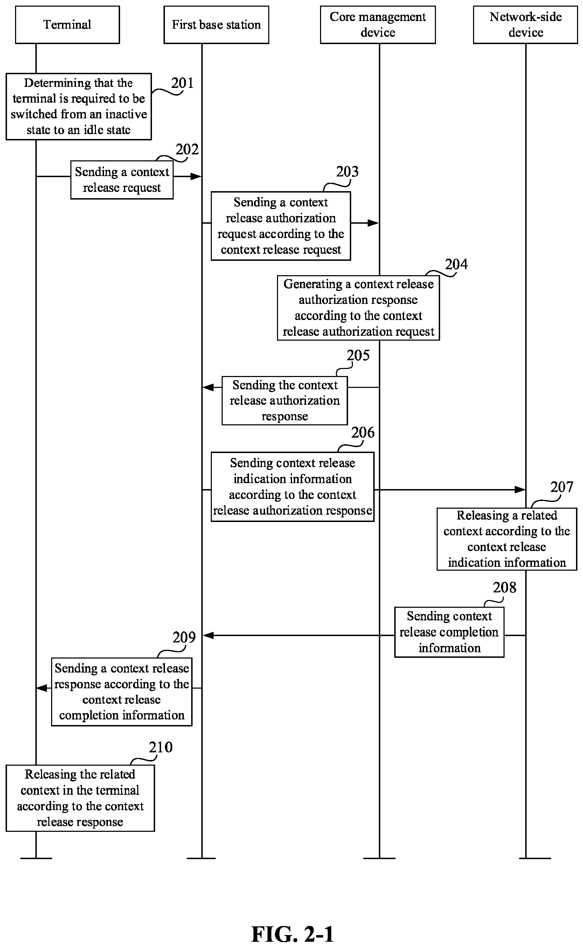

On a first aspect, the first base station may trigger the network-side device to release the related context after getting permission from the core management device, which, as shown in FIG. 2-1, specifically includes the following steps.

In Step 201, a terminal determines that the terminal is required to be switched from an inactive state to an idle state.

In the embodiment of the disclosure, it may be determined by a higher layer, for example, an application layer or a NAS, of the terminal that the terminal is required to be switched from an inactive state to an idle state.

Here, the application layer is a higher layer for interacting with a user (that is, the application layer is oriented to a user), which is mainly for directly providing service for an application process of a user. The application layer may specify a protocol that the application process follows during communication. Each application program managed by the application layer runs in its own process and usually has an independent virtual machine.

In a protocol stack, the flow of the NAS is a signaling flow required to be processed by a terminal (also called User Equipment (UE)) and a core network (called CN for short hereinafter). An RRC and Radio Access Network Application Part (RANAP) layer and a protocol layer below it are called an Access Stratum (AS); and MM, Call Control (CC), Short Message Service (SMS) and the like are called an NAS.

In the invention, the application layer detects a running state of a network application (i.e., an application for interacting with a network side, for example, an instant messaging application) in the terminal (specifically, a process of the application may be monitored) and determine whether the terminal is required to be switched from an inactive state to an idle state or not according to the running state. For example, when there is at least one network application in an on state in the terminal, the application layer may determine that the terminal is not required to be switched from an inactive state to an idle state, while when all network applications in the terminal are in an off state, the application layer may determine that the terminal is required to be switched from the inactive state to the idle state.

Exemplarily, a specific scenario may be as follows. When the terminal is in the inactive state, if the application layer detects by monitoring that a certain network application, for example, a web browser, in the terminal is turned on at present, the application layer may determine, according to a preset rule, that a user is operating the network application and the terminal may subsequently transmit data with the network side to respond to a corresponding user operation, and then the application layer determine that the terminal may be required to subsequently transmit data, so that the terminal is not required to be switched from the inactive state to the idle state, and the terminal is kept in the inactive state, and when data is required to be transmitted, the terminal may be switched to a connected state. If the application layer detects by monitoring that a certain network application, for example, a web browser, in the terminal is turned off at present, the application layer may determine, according to the preset rule, that the user does not operate the network application anymore and the terminal may subsequently be not required to transmit data with the network side to respond to a user operation, and then the application layer determines that the terminal may be not required to subsequently transmit data, so that the terminal may be switched from the inactive state to the idle state to cut off a connection between the terminal and the network side and reduce energy consumption of the terminal.

The NAS may detect a transmission/reception state of NAS signaling in the terminal and determine whether the terminal is required to be switched from the inactive state to the idle state or not according to the transmission/reception state. For example, when there is at least one piece of NAS signaling to be transmitted/received in the terminal, the NAS may determine that the terminal is not required to be switched from the inactive state to the idle state, and when there is no NAS signaling to be transmitted/received in the terminal, the NAS may determine that the terminal is required to be switched from the inactive state to the idle state.

Exemplarily, a specific scenario is as follows. When there is signaling to be transmitted/received in the NAS, it is indicated that the terminal is required to perform signaling transmission with a core network, and the NAS determines that the terminal may be required to subsequently transmit signaling, so that the terminal is not required to be switched from the inactive state to the idle state, the terminal is kept in the inactive state, and when signaling is subsequently required to be transmitted, the terminal may be switched to the connected state. When there is no signaling to be transmitted/received in the NAS, it is indicated that the terminal is presently not required to perform signaling transmission with the network side, and the NAS determines that the terminal is presently not required to transmit signaling, so that the terminal may be switched from the inactive state to the idle state to cut off the connection between the terminal and the network side and reduce the energy consumption of the terminal.

During a practical application, another manner may be adopted to determine that the terminal is required to be switched from the inactive state to the idle state. There are no limits made thereto in the embodiment of the application.

In Step 202, the terminal sends a context release request to a first base station.

The context release request is used for indicating the network side to release the related context of the terminal. Optionally, the terminal may send the context release request to the first base station through the AS.

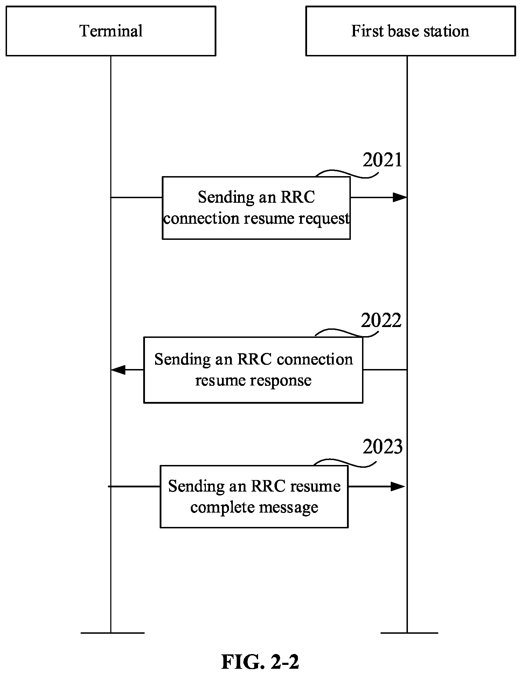

During the practical application, the terminal is required to establish an RRC connection with the first base station, and then may perform information interaction. A process of establishing an RRC connection between the terminal and the first base station may refer to FIG. 2-2 and includes the following steps.

In Step 2021, the terminal sends an RRC Connection Resume Request to the first base station.

Optionally, the terminal may send the RRC Connection Resume Request to the first base station according to a paging message received in advance.

In Step 2022, the first base station sends an RRC Connection Resume to the terminal.

In Step 2023, the terminal sends an RRC Connection Resume Complete message to the first base station.

The specific process of Step 2021 to Step 2023 may refer to an LTE RRC protocol 3GPP36.331 and will not be elaborated in the embodiment of the disclosure.

It is to be noted that, after the terminal completes establishing the RRC connection with the first base station, if handover failure, radio link failure, integrity protection failure, RRC reconfiguration failure or the like occurs, then the terminal may trigger an RRC connection reestablishment process. This process aims to reestablish an RRC connection, and may include recovery of a Signaling Radio Bear 1 (SRB1) operation, security reactivation and the like. Exemplarily, the terminal may send an RRC connection recovery request to the first base station, the first base station, after receiving the RRC connection recovery request, may send an RRC connection recovery response to the terminal according to the RRC connection recovery request, and the terminal, after receiving the RRC connection recovery response, may perform corresponding configuration according to the RRC connection recovery response and, after completing configuration, send an RRC connection recovery completion request to the first base station to notify the first base station to complete the RRC connection reestablishment process.

Optionally, the context release request in the embodiment of the disclosure may be new signaling, or may also be reused conventional signaling. When the context release request is reused conventional signaling, on one hand, referring to FIG. 2-2, the context release request may reuse signaling in the RRC connection resume process. For example, the context release request may be the RRC Connection Resume Request containing a release indication, or the context release request is the RRC Connection Resume Complete message containing the release indication. On the other hand, the context release request may reuse signaling in the RRC connection reestablishment process, for example, the context release request may be the RRC connection recovery request containing the release indication, or the context release request may be the RRC connection recovery completion request containing the release indication.

Here, the release indication is used for indicating the network side to release the related context of the terminal. The form of the release indication may be matched with a present RRC protocol, and the message containing the release indication may be used for the terminal to trigger the network side to release the related context.

In Step 203, the first base station sends a context release authorization request to a core management device according to the context release request.

In the embodiment of the disclosure, the first base station may send the context release authorization request to the core management device to request the core management device for authorizing a network-side device to release the context. Optionally, the context release authorization request may also contain the release indication.

In Step 204, the core management device generates a context release authorization response according to the context release authorization request.

The core management device may determine whether to allow the network-side device to release the related context or not according to the context release authorization request. Exemplarily, the core management device may predict whether the terminal transmits data within a preset time period or not. If it is predicted that the terminal transmits data within the preset time period, the network-side device is not allowed to release the related context, thereby avoiding the network resource waste caused by the connection reestablishment after the connection between the terminal and the network side is cut off. If it is predicted that the terminal does not transmit data within the preset time period, the network-side device is allowed to release the related context, so that a load of the network-side device may be reduced.

For example, the core management device counts down when receiving the context release authorization request, a countdown duration being equal to a duration of the preset time period, and if the core network receives a request for data transmission with the terminal before the end of countdown, it is predicted that there are data transmitted at the terminal within the preset time period.

In the embodiment of the disclosure, if the core management device determines to allow the network-side device to release the related context according to the context release authorization request, the core management device may generate a context release authorization response. The context release authorization response is used for indicating that the network-side device is allowed to release the related context.

In Step 205, the core management device sends a context release authorization response to the first base station.

A process of data transmission between the core management device and the first base station may refer to a related protocol and will not be limited in the embodiment of the disclosure.

In Step 206, the first base station sends context release indication information to a network-side device according to the context release authorization response.

Since the core management device allows the network-side device to release the context, the first base station may send the context release indication information according to the context release authorization response, the context release indication information being used for indicating the network-side device to release the related context. The first base station sends the context release indication information to the network-side device to trigger the network-side device to release the related context.

In Step 207, the network-side device releases a related context according to the context release indication information.

A release process of the related context is substantially a process that the network-side device deletes the related context, which may specifically refer to the contents in the related protocol and will not be elaborated in the embodiment of the disclosure.

In Step 208, the network-side device sends context release completion information to the first base station.

The network-side device, after completing releasing of the related context, may send the context release completion information to the first base station to notify the first base station. The context release completion information is used for indicating that the network-side device has completed releasing the related context.

In Step 209, the first base station sends a context release response to the terminal according to the context release completion information.

The first base station, after receiving the context release completion information, may send the context release response to the terminal to notify the terminal that the network-side device has completed releasing the related context. Here, contents in the context release completion information and the context release response may be the same or may be different.

In Step 210, the terminal releases the related context in the terminal according to the context release response.

In the embodiment of the disclosure, the terminal may release its own related context according to the context release response to reduce its own load. However, during the practical application, the terminal may not release its own related context. There are no limits made thereto in the embodiment of the disclosure.

It is to be noted that a sequence of the steps of the context release method provided in the embodiment may be properly regulated, the steps may be added or reduced according to a condition. Any method apparent to those skilled in the art within the technical scope of the disclosure shall fall within the scope of protection of the disclosure and thus will not be elaborated.

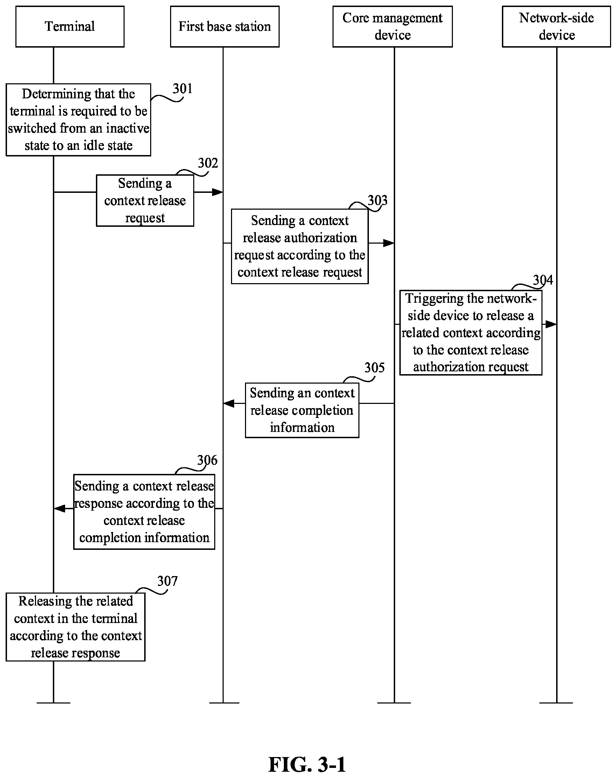

On a second aspect, the network-side device may be indirectly triggered by the core management device to release the related context, which, as shown in FIG. 3-1, specifically includes the following steps.

In Step 301, a terminal determines that the terminal is required to be switched from an inactive state to an idle state.

A specific process of Step 301 may refer to Step 201 and will not be elaborated in the embodiment of the disclosure.

In Step 302, the terminal sends a context release request to a first base station.

The context release request is used for indicating a network side to release a related context of the terminal. The other contents in Step 302 may refer to Step 202 and will not be elaborated in the embodiment of the disclosure.

In Step 303, the first base station sends a context release authorization request to a core management device according to the context release request.

The context release authorization request is used for requesting for authorization to be given to a network-side device to release the related context. The other contents in Step 303 may refer to Step 203 and will not be elaborated in the embodiment of the disclosure.

In Step 304, the core management device triggers a network-side device storing the related context to release the related context according to the context release authorization request.

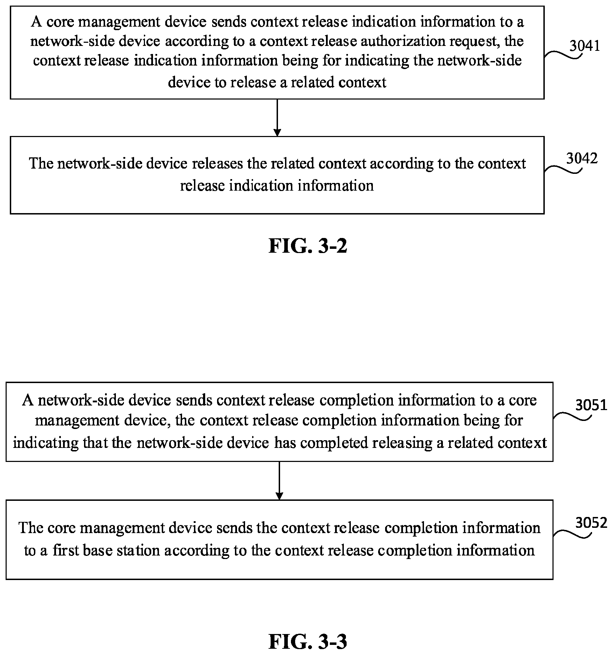

Optionally, referring to FIG. 3-2, the process that the core management device triggers the network-side device storing the related context to release the related context according to the context release authorization request may include the following steps.

In Step 3041, the core management device sends context release indication information to the network-side device according to the context release authorization request, the context release indication information being used for indicating the network-side device to release the related context.

The core management device may determine whether to allow the network-side device to release the related context or not according to the context release authorization request. Exemplarily, the core management device may predict whether the terminal transmits data within a preset time period or not. If it is predicted that the terminal transmits data within the preset time period, the network-side device is not allowed to release the related context, thereby avoiding the network resource waste caused by connection reestablishment after the connection between the terminal and the network side is cut off. If it is predicted that the terminal does not transmit data within the preset time period, the network-side device is allowed to release the related context, so that a load of the network-side device may be reduced.

For example, the core management device counts down when receiving the context release authorization request, a countdown duration being equal to a duration of the preset time period, and if the core network receives a request for transmitting data to the terminal before the end of countdown, it is predicted that there are data transmitted at the terminal within the preset time period.

In the embodiment of the disclosure, if the core management device determines to allow the network-side device to release the related context according to the context release authorization request, the core management device may send the context release indication information to the network-side device to trigger the network-side device to release the related context.

In Step 3042, the network-side device releases the related context according to the context release indication information.

Step 3042 may refer to Step 207 and will not be elaborated in the embodiment of the disclosure.

In Step 305, the core management device sends context release completion information to the first base station.

The context release completion information is used for indicating that the network-side device has completed releasing the related context.

Optionally, referring to FIG. 3-3, the process that the core management device sends the context release completion information to the first base station may include the following steps.

In Step 3051, the network-side device sends the context release completion information to the core management device, the context release completion information being used for indicating that the network-side device has completed releasing the related context.

The network-side device, after completing releasing the related context, may send the context release indication information to the core management device to notify the core management device.

In Step 3052, the core management device sends the context release completion information to the first base station according to the context release completion information.

The core management device, when receiving the context release completion information, may send the context release completion information to the first base station to notify the first base station that the network-side device has completed releasing the related context.

It is to be noted that the context release completion information sent by the network-side device and the context release completion information sent by the core management device may be the same or may be different.

In Step 306, the first base station sends a context release response to the terminal according to the context release completion information.

Step 306 may refer to Step 209 and will not be elaborated in the embodiment of the disclosure.

In Step 307, the terminal releases the related context in the terminal according to the context release response.

Step 307 may refer to Step 210 and will not be elaborated in the embodiment of the disclosure.

It is to be noted that a sequence of the steps of the context release method provided in the embodiment may be properly regulated, the steps also may be added or reduced according to a condition. Any method apparent to those skilled in the art within the technical scope of the disclosure shall fall within the scope of protection of the disclosure and thus will not be elaborated.

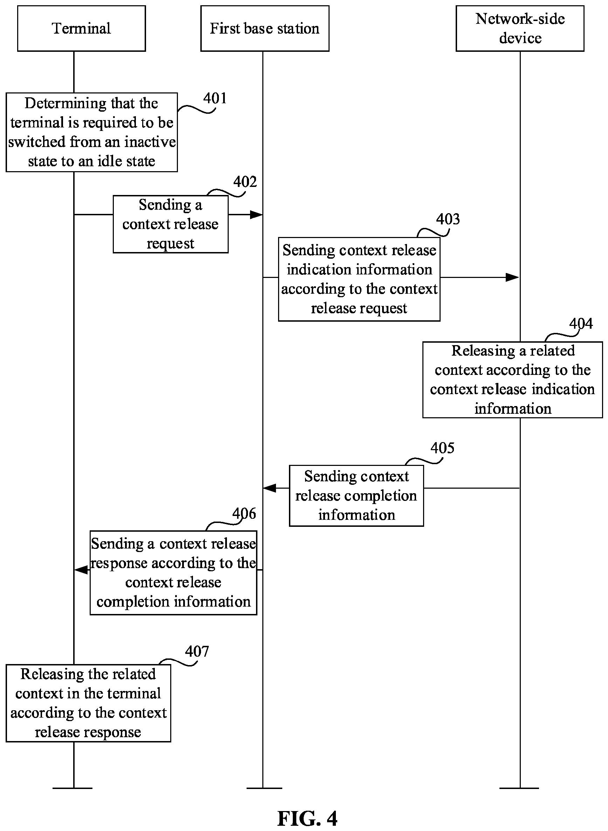

On a third aspect, the first base station may directly trigger the network-side device to release the related context, which, as shown in FIG. 4, specifically includes the following steps.

In Step 401, a terminal determines that the terminal is required to be switched from an inactive state to an idle state.

A specific process of Step 401 may refer to Step 201 and will not be elaborated in the embodiment of the disclosure.

In Step 402, the terminal sends a context release request to a first base station.

The context release request is used for indicating a network side to release a related context of the terminal. The other contents in Step 402 may refer to Step 202 and will not be elaborated in the embodiment of the disclosure.

In Step 403, the first base station sends context release indication information to a network-side device according to the context release request.

The first base station may send the context release indication information to the network-side device to trigger the network-side device to release the related context according to the context release request. The context release indication information is used for indicating the network-side device to release the related context.

In Step 404, the network-side device releases a related context according to the context release indication information.

Step 404 may refer to Step 207 and will not be elaborated in the embodiment of the disclosure.

In Step 405, the network-side device sends context release completion information to the first base station.

The context release completion information is used for indicating that the network-side device has completed releasing the related context. The other contents in Step 405 may refer to Step 208 and will not be elaborated in the embodiment of the disclosure.

In Step 406, the first base station sends a context release response to the terminal according to the context release completion information.

Step 406 may refer to Step 209 and will not be elaborated in the embodiment of the disclosure.

In Step 407, the terminal releases the related context in the terminal according to the context release response.

Step 407 may refer to Step 210 and will not be elaborated in the embodiment of the disclosure.

It is to be noted that a sequence of the steps of the context release method provided in the embodiment may be properly regulated, the steps may be added or reduced according to a condition. Any method apparent to those skilled in the art within the technical scope of the disclosure shall fall within the scope of protection of the disclosure and thus will not be elaborated.

In a related art, it is also proposed that a release indication may also be directly added into a paging message sent by the network side to enable the terminal to directly release the related context and enter the idle state. However, a new method for the terminal to trigger the network side to release the related context is provided in the embodiment of the disclosure, so that release flexibility of the related context is improved.

From the above, according to the context release method provided in the embodiments of the disclosure, the terminal triggers the network side to release the related context, and in a context release process, particularly a context release process in the inactive state, switching to the connected state for switching to the idle state is avoided, so that signaling interaction between the terminal and the network side is effectively reduced, a signaling overhead is reduced, and the whole flow is simplified.

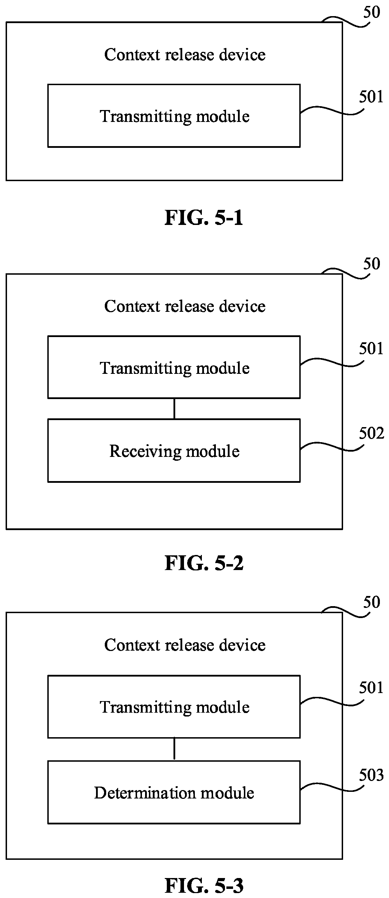

The invention provides a context release device 50, which, as shown in FIG. 5-1, includes a transmitting module 501.

The transmitting module 501 is configured to send a context release request to a first base station, the context release request being used for indicating a network side to release a related context of a terminal.

From the above, according to the context release device provided in the invention, the transmitting module triggers the network side to release the related context, and in a context release process in an inactive state, switching to a connected state for switching to an idle state is avoided, so that signaling interaction between the terminal and the network side is effectively reduced, a signaling overhead is reduced, and the whole flow is simplified.

Furthermore, as shown in FIG. 5-2, the device 50 further includes a receiving module 502. The receiving module 502 is configured to receive a context release response from the first base station.

Optionally, as shown in FIG. 5-3, the device 50 further includes a determination module 503.

The determination module 503 is configured to determine, through an application layer or a NAS, that the terminal is required to be switched from an inactive state to an idle state.

Here, the transmitting module 501 is specifically configured to:
send the context release request to the first base station through an AS.

Optionally, the context release request is an RRC Connection Resume Request containing a release indication; or, the context release request is an RRC connection recovery request containing the release indication; or, the context release request is an RRC Connection Resume Complete message containing the release indication; or, the context release request is an RRC connection recovery completion request containing the release indication.

Here, the release indication is used for indicating the network side to release the related context of the terminal.

From the above, according to the context release device provided in the embodiment of the disclosure, the transmitting module triggers the network side to release the related context, and in the context release process, particularly the context release process in the inactive state, switching to the connected state for switching to the idle state is avoided, so that signaling interaction between the terminal and the network side is effectively reduced, the signaling overhead is reduced, and the whole flow is simplified.

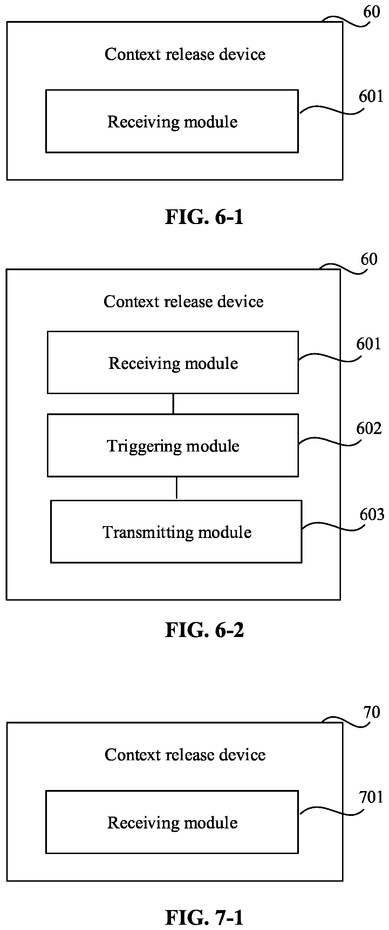

The invention further provides a context release device 60, which, as shown in FIG. 6-1, includes a receiving module 601.

The receiving module 601 is configured to receive a context release request from a terminal, the context release request being used for indicating a network side to release a related context of the terminal.

From the above, according to the context release device provided in the invention, the terminal triggers the network side to release the related context, and in a context release process in an inactive state, switching to a connected state for switching to an idle state is avoided, so that signaling interaction between the terminal and the network side is effectively reduced, a signaling overhead is reduced, and the whole flow is simplified.

Furthermore, as shown in FIG. 6-2, the device 60 further includes a triggering module 602 and a transmitting module 603.

The triggering module 602 is configured to trigger a network-side device storing the related context to release the related context according to the context release request.

The transmitting module 603 is configured to send a context release response to the terminal, the context release response being configured to trigger the terminal to release the related context.

On one aspect, the triggering module 602 is specifically configured to:
send context release indication information to the network-side device according to the context release request, the context release indication information being used for indicating the network-side device to release the related context.

The transmitting module 603 is specifically configured to:
receive context release completion information from the network-side device, the context release completion information being used for indicating that the network-side device has completed releasing the related context, and
send the context release response to the terminal according to the context release completion information.

On another aspect, the triggering module 602 is specifically configured to:
send a context release authorization request to a core management device according to the context release request, the context release authorization request being configured to request for authorizing the network-side device to release the related context.

The transmitting module 603 is specifically configured to:
receive the context release completion information from the core management device, the context release completion information being sent by the core management device after triggering the network-side device to release the related context and being used for indicating that the network-side device has completed releasing the related context, and
send the context release response to the terminal according to the context release completion information.

On another aspect, the triggering module 602 is specifically configured to:
send the context release authorization request to the core management device according to the context release request, the context release authorization request being configured to request for authorizing the network-side device to release the related context,
receive a context release authorization response sent by the core management device, the context release authorization response being used for indicating that the network-side device is allowed to release the related context, and
send the context release indication information to the network-side device according to the context release authorization response, the context release indication information being used for indicating the network-side device to release the related context.

The transmitting module 603 is specifically configured to:
receive the context release completion information sent by the network-side device, the context release completion information being used for indicating that the network-side device has completed releasing the related context, and
send the context release response to the terminal according to the context release completion information.

Optionally, the context release request is an RRC Connection Resume Request containing a release indication; or, the context release request is an RRC connection recovery request containing the release indication; or, the context release request is an RRC Connection Resume Complete message containing the release indication; or, the context release request is an RRC connection recovery completion request containing the release indication.

Here, the release indication is used for indicating the network side to release the related context of the terminal.

Optionally, the context release request is sent by the terminal accessing a first base station after the terminal determines that the terminal is required to be switched from an inactive state to an idle state.

Optionally, the network-side device includes an initial base station, and/or, a management device of a core network, and/or, a network-side central control node.

The initial base station is a base station to which a cell where the terminal having not yet been switched to the inactive state is located belongs.

An embodiment of the disclosure provides a context release device 70, which, as shown in FIG. 7-1, includes a receiving module 701.

The receiving module 701 is configured to receive a context release authorization request sent by a first base station, the context release authorization request being sent by the first base station after the first base station receives a context release request from a terminal and the context release request being used for indicating a network side to release a related context of the terminal.

From the above, according to the context release device provided in the embodiment of the disclosure, the terminal triggers the network side to release the related context, and in a context release process, particularly a context release process in an inactive state, switching to a connected state for switching to an idle state is avoided, so that signaling interaction between the terminal and the network side is effectively reduced, a signaling overhead is reduced, and the whole flow is simplified.

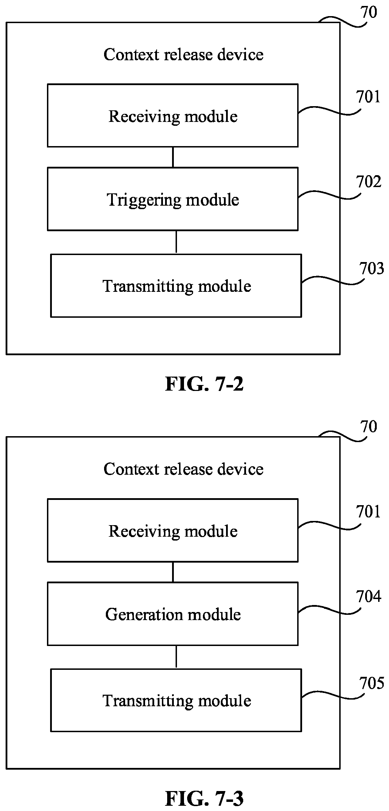

On one aspect, as shown in FIG. 7-2, the device further includes a triggering module 702 and a transmitting module 703.

The triggering module 702 is configured to trigger a network-side device storing the related context to release the related context according to the context release authorization request.

The transmitting module 703 is configured to send context release completion information to the first base station after the network-side device releases the related context, the context release completion information being used for indicating that the network-side device has completed releasing the related context.

Here, the triggering module 702 is specifically configured to:
send context release indication information to the network-side device according to the context release authorization request, the context release indication information being used for indicating the network-side device to release the related context.

The transmitting module 703 is specifically configured to:
receive the context release completion information from the network-side device, the context release completion information being used for indicating that the network-side device has completed releasing the related context, and
send the context release completion information to the first base station according to the context release completion information.

On another aspect, as shown in FIG. 7-3, the device 70 further includes a generation module 704 and a transmitting module 705.

The generation module 704 is configured to generate a context release authorization response according to the context release authorization request, the context release authorization response being used for indicating that the network-side device is allowed to release the related context.

The transmitting module 705 is configured to send the context release authorization response to the first base station.

Optionally, the context release request is sent by the terminal in a cell managed by the first base station after the terminal determines that the terminal is required to be switched from an inactive state to an idle state.

Optionally, the network-side device includes an initial base station, and/or, a management device of a core network, and/or, a network-side central control node.

The initial base station is a base station to which a cell where the terminal having not yet been switched to the inactive state is located belongs.

An embodiment of the disclosure provides a context release system, which includes a terminal and a first base station.

The terminal includes in the invention any context release device of FIG. 5-1 to 5-3.

The first base station includes in the invention any context release device of FIG. 6-1 to 6-2.

Furthermore, the system further includes any context release device of FIG. 7-1 to 7-3.

From the above, according to the context release system provided in the embodiment of the disclosure, the terminal triggers a network side to release a related context, and in a context release process, particularly a context release process in an inactive state, switching to a connected state for switching to an idle state is avoided, so that signaling interaction between the terminal and the network side is effectively reduced, a signaling overhead is reduced, and the whole flow is simplified.

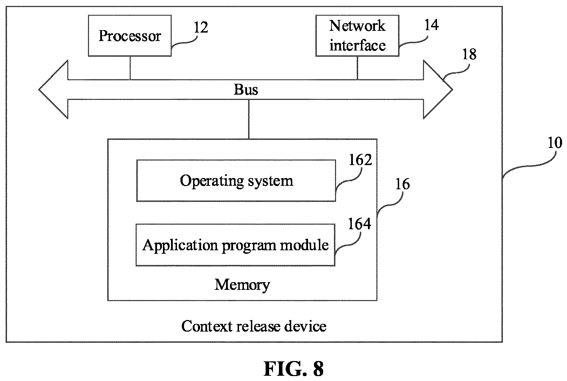

FIG. 8 is a structure diagram of a context release device 10 according to an exemplary embodiment of the disclosure. The context release device 10 may be a first base station 110, a network-side device 120, a core management device 130 or a terminal. The context release device 10 includes a processor 12 and a network interface 14.

The processor 12 includes one or more than one processing cores. The processor 12 runs a software program and a module, thereby executing various functional applications and data processing.

There may be multiple network devices 14. The network device 14 is configured to communicate with another storage device or network device.

Optionally, the context release device 10 further includes components such as a memory 16 and a bus 18. Here, the memory 16 and the network interface 14 are connected with the processor 12 through the bus 18 respectively.

The memory 16 may be configured to store the software program and the module. Specifically, the memory 16 may store an operating system 162 and an application program module 164 required by at least one function. The operating system 162 may be an operating system such as a real-time operating system (Real Time eXecutive (RTX), LINUX, UNIX, WINDOWS or OS X.

In some implementation modes, when the context release device 10 is the first base station, the network interface 14 may be a transceiver antenna (which may also be considered as a transmitter and a receiver), and the application program module 164 stored in the memory 16 may execute steps such as steps 203, 206, 209, 303, 306, 403 or 406.

When the context release device 10 is the terminal, the network interface 14 may be a transceiver antenna (which may also be considered as a transmitter and a receiver), and the application program module 164 stored in the memory 16 may execute steps 201, 202, 210, 301, 302, 307, 401, 402 or 407 and the like.

When the context release device 10 is the core management device, the application program module 164 stored in the memory 16 may execute steps such as steps 204, 202, 210, 304 and 305.

Those skilled in the art may clearly learn about that specific working processes of the system, devices and modules described above may refer to the corresponding processes in the method embodiments and will not be elaborated herein for convenient and brief description.

In the embodiments of the disclosure, the term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

Those of ordinary skill in the art should understand that all or part of the steps of the abovementioned embodiments may be completed through hardware, or may also be completed through the hardware instructed by a program, the program may be stored in a computer-readable storage medium, and the storage medium may be a read-only memory, a magnetic disk, an optical disk or the like.

The above are only the preferred embodiments of the disclosure and not intended to limit the invention which is solely defined by the claims.

## Claims

1. A context release method **characterized by**:
determining (201), by an application layer or Non-Access Stratum, NAS, of a terminal, that the terminal is required to be switched from an inactive state to an idle state;
sending, by the terminal (202), a context release request to a first base station, the context release request being used for indicating a network side to release a related context of the terminal;
receiving (209), by the terminal, a context release response from the first base station; and
releasing (210), by the terminal, the related context of the terminal according to the context release response.

2. A context release device (50) implemented by a terminal and **characterized by**:
a determination module (503), configured to determine, through an application layer or a Non-Access Stratum, NAS, of the terminal, that the terminal is required to be switched from an inactive state to an idle state;
a transmitting module (501), configured to send a context release request to a first base station, wherein the context release request is used for indicating a network side to release a related context of the terminal;
a receiving module (502), configured to receive a context release response sent by the first base station
wherein the related context of the terminal is released by the terminal according to the context release response.

3. The device of claim 2, wherein the transmitting module is configured to:
send the context release request to the first base station through an Access Stratum, AS..

4. The device of claim 2 or 3, wherein
the context release request is a Radio Resource Control, RRC, Connection Resume Request containing a release indication; or,
the context release request is an RRC connection recovery request containing a release indication; or,
the context release request is an RRC Connection Resume Complete message containing a release indication; or,
the context release request is an RRC connection recovery completion request containing a release indication,
wherein the release indication is used for indicating the network side to release the related context of the terminal.

5. A context release device (60), included in a first base station and **characterized by**:
a receiving module (601), configured to receive a context release request from a terminal in communication with the first base station after an application layer or Non-Access Stratum, NAS, of the terminal determines that the terminal is required to be switched from an inactive state to an idle state, wherein the context release request is used for indicating a network side to release a related context of the terminal;
a triggering module (602), configured to trigger a network-side device storing the related context to release the related context according to the context release request; and
a transmitting module (603), configured to send a context release response to the terminal, wherein the context release response is used for triggering the terminal to release the related context.

6. The device of claim 5, wherein
the triggering module is specifically configured to:
send context release indication information to the network-side device according to the context release request, wherein the context release indication information is used for indicating the network-side device to release the related context; and
the transmitting module is specifically configured to:
receive context release completion information from the network-side device, wherein the context release completion information is used for indicating that the network-side device has completed releasing the related context, and
send the context release response to the terminal according to the context release completion information.

7. The device of claim 5, wherein
the triggering module is specifically configured to:
send a context release authorization request to a core management device according to the context release request, wherein the context release authorization request is used for requesting for authorizing the network-side device to release the related context; and
the transmitting module is specifically configured to:
receive context release completion information from the core management device, wherein the context release completion information is sent by the core management device after the core management device triggers the network-side device to release the related context and is used for indicating that the network-side device has completed releasing the related context, and
send the context release response to the terminal according to the context release completion information.

8. The device of claim 5, wherein
the triggering module is specifically configured to:
send a context release authorization request to a core management device according to the context release request, wherein the context release authorization request is used for requesting for authorizing the network-side device to release the related context,
receive a context release authorization response sent by the core management device, wherein the context release authorization response is used for indicating that the network-side device is allowed to release the related context, and
send context release indication information to the network-side device according to the context release authorization response, wherein the context release indication information is used for indicating the network-side device to release the related context; and
the transmitting module is specifically configured to:
receive context release completion information sent by the network-side device, wherein the context release completion information is used for indicating that the network-side device has completed releasing the related context, and
send the context release response to the terminal according to the context release completion information.

9. The device of any one of claims 5-8, wherein
the network-side device comprises an initial base station, and/or a management device of a Core Network, and/or a network-side central control node; and
the initial base station is a base station to which a cell belongs where the terminal is located while it is not yet switched to an inactive state.

## Patentansprüche

1. Kontextfreigabeverfahren, **gekennzeichnet durch**:
Bestimmen (201), durch eine Anwendungsschicht oder Nicht-Zugriffsschicht (NAS) eines Endgerätes, dass das Endgerät von einem inaktiven Zustand in einen Ruhezustand umgeschaltet werden muss;
Senden, durch das Endgerät (202), einer Kontextfreigabeanfrage an eine erste Basisstation, wobei die Kontextfreigabeanfrage dazu verwendet wird, eine Netzwerkseite anzugeben, um einen zugehörigen Kontext des Endgerätes freizugeben,
Empfangen (209), durch das Endgerät, einer Kontextfreigabeantwort von der ersten Basisstation; und
Freigeben (210), durch das Endgerät, des zugehörigen Kontextes des Endgerätes gemäß der Kontextfreigabeantwort.

2. Kontextfreigabevorrichtung (50), implementiert durch ein Endgerät und **gekennzeichnet durch**:
ein Bestimmungsmodul (503), das dazu ausgebildet ist, durch eine Anwendungsschicht oder eine Nicht-Zugriffsschicht (NAS) des Endgerätes zu bestimmen, dass das Endgerät von einem inaktiven Zustand in einen Ruhezustand umgeschaltet werden muss;
ein Sendemodul (501), das dazu ausgebildet ist, eine Kontextfreigabeanfrage an eine erste Basisstation zu senden, wobei die Kontextfreigabeanfrage dazu verwendet wird, eine Netzwerkseite anzuweisen, einen zugehörigen Kontext des Endgerätes freizugeben;
ein Empfangsmodul (502), das dazu ausgebildet ist, eine von der ersten Basisstation gesendete Kontextfreigabeantwort zu empfangen,
wobei der zugehörige Kontext des Endgerätes gemäß der Kontextfreigabeantwort durch das Endgerät freigegeben wird.

3. Vorrichtung nach Anspruch 2, wobei das Sendemodul für Folgendes ausgebildet ist:
Senden der Kontextfreigabeanfrage an die erste Basisstation durch eine Zugriffsschicht (AS).

4. Vorrichtung nach Anspruch 2 oder 3, wobei
die Kontextfreigabeanfrage eine Funkressourcensteuerungs-(RRC)-Verbindungswiederaufnahmeanfrage ist, die eine Freigabeanzeige enthält; oder,
die Kontextfreigabeanfrage eine RRC-Verbindungswiederherstellungsanfrage ist, die eine Freigabeanzeige enthält; oder,
die Kontextfreigabeanfrage eine RRC-Verbindungswiederaufnahme-Abschlussnachricht ist, die eine Freigabeanzeige enthält; oder,
die Kontextfreigabeanfrage eine RRC-Verbindungswiederherstellungs-Abschlussanfrage ist, die eine Freigabeanzeige enthält,
wobei die Freigabeanzeige verwendet wird, um die Netzwerkseite anzuweisen, den zugehörigen Kontext des Endgerätes freizugeben.

5. Kontextfreigabevorrichtung (60), die in einer ersten Basisstation enthalten und durch Folgendes gekennzeichnet ist:
ein Empfangsmodul (601), das dazu ausgebildet ist, eine Kontextfreigabeanfrage von einem Endgerät in Kommunikation mit der ersten Basisstation zu empfangen, nachdem eine Anwendungsschicht oder Nicht-Zugriffsschicht (NAS) des Endgerätes bestimmt hat, dass das Endgerät von einem inaktiven Zustand in einen Ruhezustand umgeschaltet werden muss, wobei die Kontextfreigabeanfrage verwendet wird, um eine Netzwerkseite anzuweisen, einen zugehörigen Kontext des Endgerätes freizugeben;
ein Auslösemodul (602), das dazu ausgebildet ist, eine netzwerkseitige Vorrichtung, die den zugehörigen Kontext speichert, zu veranlassen, den zugehörigen Kontext gemäß der Kontextfreigabeanfrage freizugeben;
und
ein Sendemodul (603), das dazu ausgebildet ist, eine Kontextfreigabeantwort an das Endgerät zu senden, wobei die Kontextfreigabeantwort dazu verwendet wird, das Endgerät zu veranlassen, den zugehörigen Kontext freizugeben.

6. Vorrichtung nach Anspruch 5, wobei
das Auslösemodul speziell für Folgendes ausgebildet ist:
Senden von Kontextfreigabe-Anzeigeinformationen an die netzwerkseitige Vorrichtung gemäß der Kontextfreigabeanfrage, wobei die Kontextfreigabe-Anzeigeinformationen verwendet werden, um die netzwerkseitige Vorrichtung anzuweisen, den zugehörigen Kontext freizugeben; und
das Sendemodul speziell für Folgendes ausgebildet ist:
Empfangen von Kontextfreigabe-Abschlussinformationen von der netzwerkseitigen Vorrichtung, wobei die Kontextfreigabe-Abschlussinformationen verwendet werden, um anzugeben, dass die netzwerkseitige Vorrichtung die Freigabe des zugehörigen Kontextes abgeschlossen hat, und
Senden der Kontextfreigabeantwort an das Endgerät gemäß den Kontextfreigabe-Abschlussinformationen.

7. Vorrichtung nach Anspruch 5, wobei
das Auslösemodul speziell für Folgendes ausgebildet ist:
Senden einer Kontextfreigabe-Autorisierungsanfrage an eine Kernverwaltungsvorrichtung gemäß der Kontextfreigabeanfrage, wobei die Kontextfreigabe-Autorisierungsanfrage dazu verwendet wird, die netzwerkseitige Vorrichtung zu autorisieren, den zugehörigen Kontext freizugeben; und
das Sendemodul speziell für Folgendes ausgebildet ist:
Empfangen von Kontextfreigabe-Abschlussinformationen von der Kernverwaltungsvorrichtung, wobei die Kontextfreigabe-Abschlussinformationen von der Kernverwaltungsvorrichtung gesendet werden, nachdem die Kernverwaltungsvorrichtung die netzwerkseitige Vorrichtung veranlasst hat, den zugehörigen Kontext freizugeben, und verwendet werden, um anzugeben, dass die netzwerkseitige Vorrichtung das Freigeben des zugehörigen Kontextes abgeschlossen hat, und
Senden der Kontextfreigabeantwort an das Endgerät gemäß den Kontextfreigabe-Abschlussinformationen.

8. Vorrichtung nach Anspruch 5, wobei
das Auslösemodul speziell für Folgendes ausgebildet ist:
Senden einer Kontextfreigabe-Autorisierungsanfrage an eine Kernverwaltungsvorrichtung gemäß der Kontextfreigabeanfrage, wobei die Kontextfreigabe-Autorisierungsanfrage dazu verwendet wird, die netzwerkseitige Vorrichtung zu autorisieren, den zugehörigen Kontext freizugeben,
Empfangen einer von der Kernverwaltungsvorrichtung gesendeten Kontextfreigabe-Autorisierungsantwort, wobei die Kontextfreigabe-Autorisierungsantwort verwendet wird, um anzugeben, dass die netzwerkseitige Vorrichtung berechtigt ist, den zugehörigen Kontext freizugeben, und
Senden von Kontextfreigabe-Anzeigeinformationen an die netzwerkseitige Vorrichtung gemäß der Kontextfreigabe-Autorisierungsanfrage, wobei die Kontextfreigabe-Anzeigeinformationen verwendet werden, um die netzwerkseitige Vorrichtung anzuweisen, den zugehörigen Kontext freizugeben; und
das Sendemodul speziell für Folgendes ausgebildet ist:
Empfangen der von der netzwerkseitigen Vorrichtung gesendeten Kontextfreigabe-Abschlussinformationen, wobei die Kontextfreigabe-Abschlussinformationen verwendet werden, um anzugeben, dass die netzwerkseitige Vorrichtung die Freigabe des zugehörigen Kontextes abgeschlossen hat, und
Senden der Kontextfreigabeantwort an das Endgerät gemäß den Kontextfreigabe-Abschlussinformationen.

9. Vorrichtung nach einem der Ansprüche 5-8, wobei
die netzwerkseitige Vorrichtung eine anfängliche Basisstation und/oder eine Verwaltungsvorrichtung eines Kernnetzes und/oder einen netzwerkseitigen zentralen Steuerknoten aufweist; und
die anfängliche Basisstation eine Basisstation ist, zu der eine Zelle gehört, bei der sich das Endgerät befindet, während es noch nicht in einen inaktiven Zustand umgeschaltet ist.

## Revendications

1. Procédé de libération de contexte, **caractérisé par** les étapes consistant à :
déterminer (201), par une couche application ou une strate sans accès (NAS) d'un terminal, que le terminal doit passer d'un état inactif à un état de repos ;
envoyer, par le terminal (202), une demande de libération de contexte à une première station de base, la demande de libération de contexte étant utilisée pour indiquer un côté réseau pour libérer un contexte associé du terminal ;
recevoir (209), par le terminal, une réponse de libération de contexte en provenance de la première station de base ; et
libérer (210), par le terminal, le contexte associé du terminal selon la réponse de libération de contexte.

2. Dispositif de libération de contexte (50) mis en œuvre par un terminal et **caractérisé par** :
un module de détermination (503), configuré pour déterminer, par l'intermédiaire d'une couche application ou d'une strate sans accès (NAS) du terminal, que le terminal doit passer d'un état inactif à un état de repos ;
un module de transmission (501), configuré pour envoyer une demande de libération de contexte à une première station de base, la demande de libération de contexte étant utilisée pour indiquer un côté réseau pour libérer un contexte associé du terminal ;
un module de réception (502), configuré pour recevoir une réponse de libération de contexte envoyée par la première station de base,
le contexte associé du terminal étant libéré par le terminal selon la réponse de libération de contexte.

3. Dispositif selon la revendication 2, dans lequel le module de transmission est configuré pour :
envoyer la demande de libération de contexte à la première station de base par l'intermédiaire d'une strate d'accès (AS).

4. Dispositif selon la revendication 2 ou 3, dans lequel :
la demande de libération de contexte est une demande de reprise de connexion de contrôle des ressources radio (RRC) contenant une indication de libération ; ou
la demande de libération de contexte est une demande de récupération de connexion RRC contenant une indication de libération ; ou
la demande de libération de contexte est un message de reprise achevée de connexion RRC contenant une indication de libération ; ou
la demande de libération de contexte est une demande d'achèvement de récupération de connexion RRC contenant une indication de libération,
l'indication de libération étant utilisée pour indiquer le côté réseau pour libérer le contexte associé du terminal.

5. Dispositif de libération de contexte (60), inclus dans une première station de base et **caractérisé par** :
un module de réception (601), configuré pour recevoir une demande de libération de contexte en provenance d'un terminal en communication avec la première station de base après qu'une couche application ou une strate sans accès (NAS) du terminal a déterminé que le terminal doit passer d'un état inactif à un état de repos, la demande de libération de contexte étant utilisée pour indiquer un côté réseau pour libérer un contexte associé du terminal ;
un module de déclenchement (602), configuré pour déclencher un dispositif côté réseau qui stocke le contexte associé pour libérer le contexte associé selon la demande de libération de contexte ; et
un module de transmission (603), configuré pour envoyer une réponse de libération de contexte au terminal, la réponse de libération de contexte étant utilisée pour déclencher le terminal pour libérer le contexte associé.

6. Dispositif selon la revendication 5, dans lequel :
le module de déclenchement est spécifiquement configuré pour :
envoyer une information d'indication de libération de contexte au dispositif côté réseau selon la demande de libération de contexte, l'information d'indication de libération de contexte étant utilisée pour indiquer le dispositif côté réseau pour libérer le contexte associé ; et
le module de transmission est spécifiquement configuré pour :
recevoir une information d'achèvement de libération de contexte en provenance du dispositif côté réseau, l'information d'achèvement de libération de contexte étant utilisée pour indiquer que le dispositif côté réseau a achevé la libération du contexte associé, et
envoyer la réponse de libération de contexte au terminal selon l'information d'achèvement de libération de contexte.

7. Dispositif selon la revendication 5, dans lequel :
le module de déclenchement est spécifiquement configuré pour :
envoyer une demande d'autorisation de libération de contexte à un dispositif central de gestion selon la demande de libération de contexte, la demande d'autorisation de libération de contexte étant utilisée pour demander d'autoriser le dispositif côté réseau à libérer le contexte associé ; et
le module de transmission est spécifiquement configuré pour :
recevoir une information d'achèvement de libération de contexte en provenance du dispositif central de gestion, l'information d'achèvement de libération de contexte étant envoyée par le dispositif central de gestion après que le dispositif central de gestion a déclenché le dispositif côté réseau pour libérer le contexte associé et étant utilisée pour indiquer que le dispositif côté réseau a achevé la libération du contexte associé, et
envoyer la réponse de libération de contexte au terminal selon l'information d'achèvement de libération de contexte.

8. Dispositif selon la revendication 5, dans lequel :
le module de déclenchement est spécifiquement configuré pour :
envoyer une demande d'autorisation de libération de contexte à un dispositif central de gestion selon la demande de libération de contexte, la demande d'autorisation de libération de contexte étant utilisée pour demander d'autoriser le dispositif côté réseau à libérer le contexte associé,
recevoir une réponse d'autorisation de libération de contexte envoyée par le dispositif central de gestion, la réponse d'autorisation de libération de contexte étant utilisée pour indiquer que le dispositif côté réseau est autorisé à libérer le contexte associé, et
envoyer une information d'indication de libération de contexte au dispositif côté réseau selon la réponse d'autorisation de libération de contexte, l'information d'indication de libération de contexte étant utilisée pour indiquer le dispositif côté réseau pour libérer le contexte associé ; et
le module de transmission est spécifiquement configuré pour :
recevoir une information d'achèvement de libération de contexte envoyée par le dispositif côté réseau, l'information d'achèvement de libération de contexte étant utilisée pour indiquer que le dispositif côté réseau a achevé la libération du contexte associé, et
envoyer la réponse de libération de contexte au terminal selon l'information d'achèvement de libération de contexte.

9. Dispositif selon l'une quelconque des revendications 5 à 8, dans lequel :
le dispositif côté réseau comprend une station de base initiale et/ou un dispositif de gestion d'un réseau central et/ou un nœud central de commande côté réseau ; et
la station de base initiale est une station de base à laquelle appartient une cellule où se trouve le terminal pendant qu'il n'est pas encore passé dans un état inactif.
